# EUROPEAN PATENT APPLICATION

(11) **EP 4 715 577 A1**
(43) Date of publication of application: **25.03.2026**
(21) Application number: 25202721.4
(22) Date of filing: 17.09.2025
(51) Int. Cl.: G06F 8/41

(54) **METHOD TO IMPROVE INSTRUCTION LEVEL PARALLELISM, MEMORY BANDWIDTH UTILIZATION AND REDUCE LATENCY**

(30) Priority: 19.09.2024 US 202463696789 P; 02.09.2025 US 202519317070
(71) Applicant: Samsung Electronics Co., Ltd., Suwon-si, Gyeonggi-do 16677 (KR)
(72) Inventor: ZHANG, Tong, San Jose, CA, 95134 (US); ZENG, Jianping, San Jose, CA, 95134 (US); ZHANG, Da, San Jose, CA, 95134 (US); PITCHUMANI, Rekha, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

A system is disclosed. The system may include a processor including a register and a code memory. A reordering component may reorder a first instruction and a second instruction in a set of instructions of a first type in a list of code stored in the code memory, at least one of the first instruction and the second instruction accessing the register.

## Description

### FIELD

The disclosure relates generally to instruction execution, and more particularly to improving execution efficiency.

### BACKGROUND

Processing of instructions may involve loading data into registers and then executing commands on those registers. Even if additional registers are available, only the specified registers may be used.

A need remains to improve the efficiency of instruction processing.

### SUMMARY

The invention is set out in the appended claims. A code memory may store a list of code. A reordering component may reorder a first instruction and a second instruction in the list of code, with at least one of the instructions accessing a register in a processor.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 compares two pseudo-code versions to implement a particular high-level programming language instruction.
FIG. 2 shows a machine equipped to generate optimized code for execution on a processor, according to embodiments of the disclosure.
FIG. 3 shows details of the machine of FIG. 2, according to embodiments of the disclosure.
FIG. 4 shows how code to be executed by the processor of FIG. 2 may be adapted to manage high-level programming language instructions, according to embodiments of the disclosure.
FIG. 5 compares execution time for code that is not optimized with code that is optimized, according to embodiments of the disclosure.
FIG. 6 shows details of the code generator of FIG. 2, according to embodiments of the disclosure.
FIG. 7 shows how the loop duplicator of FIG. 6 may be used in optimizing code for execution on the processor of FIG. 2, according to embodiments of the disclosure.
FIG. 8 shows how the renaming component of FIG. 4 may be used in optimizing code for execution on the processor of FIG. 2, according to embodiments of the disclosure.
FIG. 9 shows how the reordering component of FIG. 6 may be used in optimizing code for execution on the processor of FIG. 2, according to embodiments of the disclosure.
FIG. 10 shows a high level flow to optimize code for execution on the processor of FIG. 2, according to embodiments of the disclosure.
FIG. 11 shows a flowchart of an example procedure for optimizing code for execution by the processor of FIG. 2, according to embodiments of the disclosure.
FIG. 12 shows a flowchart of an example procedure for converting a high-level programming language instruction into a set of instructions, according to embodiments of the disclosure.
FIG. 13 shows a flowchart of an example procedure for the loop duplicator of FIG. 6 to unroll a loop, according to embodiments of the disclosure.
FIG. 14 shows a flowchart of an example procedure for the reordering component of FIG. 6 to reorder instructions in the code, according to embodiments of the disclosure.
FIG. 15 shows a flowchart of an example procedure for the remaining component of FIG. 4 to rename a register, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Programs are often written in high-level programming languages, as writing assembly language, micro-code, or binary code specific to a particular processor is often a difficult and time-consuming task. Compilers or interpreters may then process the program to generate the appropriate binary code for the processor.

Generating the binary code from a particular program is typically fairly straightforward: particular high-level statements may translate into one or more specific binary instructions. The compiler or interpreter may have to track which registers are being used to store particular data, and may generate instructions to move data in and out of the registers in the processor, but this process is otherwise well-understood.

But there may be optimizations applicable to the binary code that would be overlooked by simple translation of the high-level programming language into binary code. For example, consider the situation where the processor includes, say, 16 registers. Simple translation of the high-level programming language into binary code might only use, for example, four of the 16 registers, leaving the remaining registers unused, whereas code efficiency might be improved by leveraging the unused but available registers.

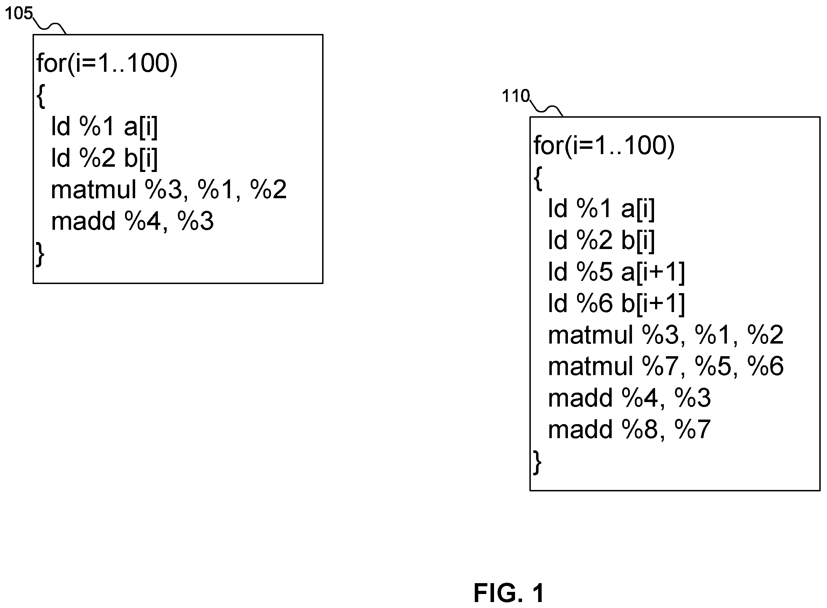

Consider, for example, a matrix multiply and accumulate operation. The high-level program code might include a single instruction such as matmuladd a, b, where a and b are variables identifying the matrices to be multiplied and accumulated. But to implement this instruction in binary code, multiple binary instructions, such as a for-loop, may be used. A loop may include an index variable whose value is iterated as the loop is processed, and a body of the loop that is processed in each iteration of the loop with a different value for the index variable. A row from matrix a may be loaded into one register, and a column from matrix b may be loaded into another register (each of which may be thought of as a vector). The processor may then calculate the product of the two vectors, and then the result of the product may be accumulated in a third register (which may store the accumulation of all such products). For example, in pseudo-code form, the for-loop might look as shown in pseudo-code 105 of FIG. 1.

But this loop only uses registers %1 through %4. If there are other registers available in the processor, these other registers are not used, which may miss an opportunity to improve execution efficiency.

Embodiments of the disclosure address these problems by improving binary code generation. By factoring in the number of registers that are available in the processor, as well as the number of instructions that may fit into code memory, the for-loop may be unrolled-that is, the instructions that form the body of the loop may be repeated within the loop-in a manner that increases operational efficiency. For example, consider pseudo-code 110 shown in FIG. 1.

Assuming that the code memory may support four instructions (such as the four load operations) at one time and that there are eight registers available in the processor, additional memory load requests may be performed in parallel, improving execution efficiency. All four load instructions may be carried out in parallel, rather than performing two load instructions at one point in time and two more load instructions later. Because load instructions might entail delays to access the data from memory, parallelizing load instructions in this manner may reduce the overall time required to execute the code. Similarly, as other instructions might involve their own delays, parallelizing such instructions may reduce the overall time required to execute the code.

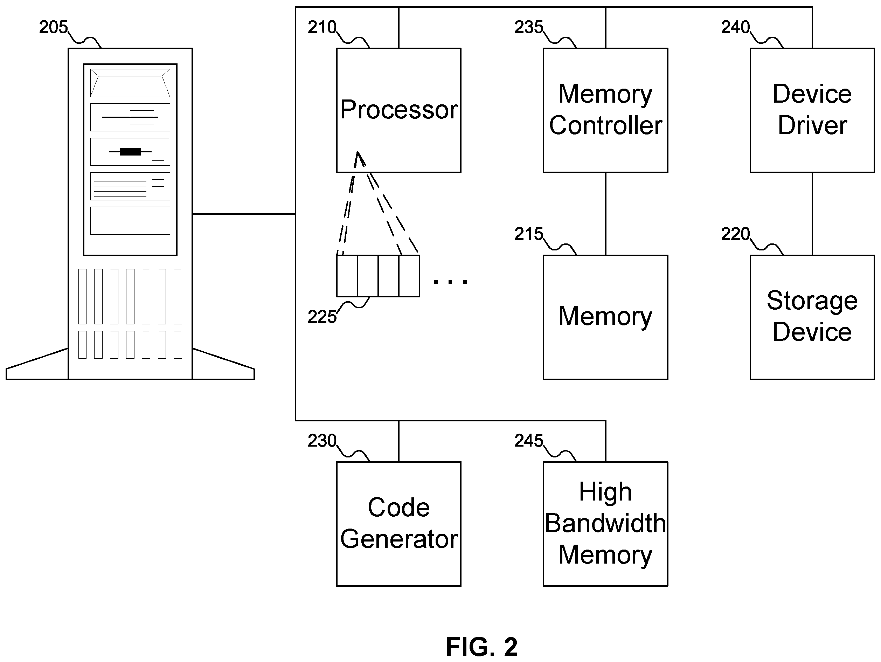

FIG. 2 shows a machine including a code generate to generate optimized code for execution on a processor, according to embodiments of the disclosure. In FIG. 2, machine 205, which may also be termed a host or a system, may include processor 210, memory 215, and storage device 220. While FIG. 2 shows one storage device 220, embodiments of the disclosure may include any number of storage devices 220.

Processor 210, which may also be referred to as a host processor, may be any variety of processor. (Processor 210, along with the other components discussed below, are shown outside the machine for ease of illustration: embodiments of the disclosure may include these components within the machine.) While FIG. 2 shows a single processor 210, machine 205 may include any number (one or more, without bound) of processors, each of which may be single core or multi-core processors, each of which may implement a Reduced Instruction Set Computer (RISC) architecture or a Complex Instruction Set Computer (CISC) architecture (among other possibilities), and may be mixed in any desired combination. Processor 210 may include registers, such as registers 225 (the collection of registers may be termed a register file). Processor 210 may execute binary code as may be generated by code generator 230, as discussed further below.

Processor 210 may be coupled to memory 215. Memory 215, which may also be referred to as a main memory, may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM) etc. Memory 215 may also be any desired combination of different memory types, and may be managed by memory controller 235. Memory 215 may be used to store data that may be termed "short-term": that is, data not expected to be stored for extended periods of time. Examples of short-term data may include temporary files, data being used locally by applications (which may have been copied from other storage locations), and the like.

Processor 210 and memory 215 may also support an operating system under which various applications may be running. These applications may issue requests (which may also be termed commands) to read data from or write data to either memory 215 or storage device 220. Whereas memory 215 may be used to store data that is considered "short-term", storage device 220 may be used to store data that is considered "long-term": that is, data that is expected to be retained for longer periods of time and that should be retained in a persistent manner, even if delivery of power to machine 205 should be interrupted. Storage device 220 may be accessed using device driver 240. While FIG. 2 shows one device driver 240 being used to manage access to storage device 220, embodiments of the disclosure may include more than one device driver 240, each used to manage access to different storage devices 220, or a single device driver 240 may be used to manage access to all storage devices 220.

Storage device 220 may be associated with an accelerator. Such an accelerator may be used for, for example, near-data processing. That is, the accelerator may be used to process data closer to storage device 220, to reduce or eliminate transfer of data from storage device 220 into memory 215. The use of an accelerator for near-data processing may also offload processing from processor 210, as the accelerator may perform such processing instead of processor 210. Like processor 205, such an accelerator may implement a Reduced Instruction Set Computer (RISC) architecture or a Complex Instruction Set Computer (CISC) architecture (among other possibilities), and may be implemented, for example, using a Central Processing Unit (CPU), a Field Programmable Gate Array (FPGA), an Application-Specific Integrated Circuit (ASIC), a System-on-a-Chip (SoC), a Graphics Processing Unit (GPU), a General Purpose GPU (GPGPU), a Neural Processing Unit (NPU), or a Tensor Processing Unit (TPU).

The combination of storage device 220 and accelerator may also be referred to as a computational storage device, computational storage unit, computational storage device, or computational device. Storage device 220 and an accelerator may be designed and manufactured as a single integrated unit, or the accelerator may be separate from storage device 220. The phrase "associated with" is intended to cover both a single integrated unit including both a storage device and an accelerator and a storage device that is paired with an accelerator but that are not manufactured as a single integrated unit. In other words, a storage device and an accelerator may be said to be "paired" when they are physically separate devices but are connected in a manner that enables them to communicate with each other. Further, in the remainder of this document, any reference to storage device 220 may be understood to refer to both storage device 220 and the accelerator either as physically separate but paired (and therefore may include the other device) or to both devices integrated into a single component as a computational storage unit.

In addition, the connection between the storage device and the paired accelerator might enable the two devices to communicate, but might not enable one (or both) devices to work with a different partner: that is, the storage device might not be able to communicate with another accelerator, and/or the accelerator might not be able to communicate with another storage device. For example, the storage device and the paired accelerator might be connected serially (in either order) to the fabric, enabling the accelerator to access information from the storage device in a manner another accelerator might not be able to achieve.

While FIG. 2 uses the generic term "storage device", embodiments of the disclosure may include any storage device formats that may be associated with computational storage, examples of which may include hard disk drives and Solid State Drives (SSDs). In addition, in systems that include multiple storage devices 220, storage devices 220 may be of the same or different types. For example, one storage device 220 might be an SSD, whereas another storage device 220 might be a hard disk drive. Any reference to a specific type of storage device, such as an "SSD", below should be understood to include such other embodiments of the disclosure.

Processor 205 and storage device 220 may communicate across a fabric (not shown in FIG. 2). This fabric may be any fabric along which information may be passed. Such fabrics may include fabrics that may be internal to machine 205, and which may use interfaces such as Peripheral Component Interconnect Express (PCIe), Serial AT Attachment (SATA), or Small Computer Systems Interface (SCSI), among others. Such fabrics may also include fabrics that may be external to machine 205, and which may use interfaces such as Ethernet, Infiniband, or Fibre Channel, among others. In addition, such fabrics may support one or more protocols, such as Non-Volatile Memory Express (NVMe), NVMe over Fabrics (NVMe-oF), Simple Service Discovery Protocol (SSDP), or a cache-coherent interconnect protocol, such as the Compute Express Link ^{®} (CXL9) protocol, among others. (Compute Express Link and CXL are registered trademarks of the Compute Express Link Consortium in the United States.) Thus, such fabrics may be thought of as encompassing both internal and external networking connections, over which commands may be sent, either directly or indirectly, to storage device 220. In embodiments of the disclosure where such fabrics support external networking connections, storage device 220 might be located external to machine 205, and storage device 220 might receive requests from a processor remote from machine 205.

In some embodiments of the disclosure, memory 215 may be supplemented by or replaced with high bandwidth memory 245. High bandwidth memory 245 (which may be abbreviated as HBM, and which may also be referred to as stacked memory, vertically stacked memory, or a memory package with stacked dies) may be a set of memory dies that are stacked in a three-dimensional configuration and connected via channels (sometimes called through-silicon vias or TSVs). A logic die may be provide for high-speed links between the memory dies. In some embodiments of the disclosure, high bandwidth memory 245 may also include a processor of some sort: that is, a compute capability or a compute engine. For example, high bandwidth memory 245 may include a processor, similar to processor 210. Or, high bandwidth memory 245 may include a more specific-purpose component, such as an FPGA, ASIC, SoC, GPU, GPGPU, NPU, or TPU. In such embodiments of the disclosure, the logic die may also enable high-speed links between the memory dies and the processor or other compute capability. For purposes of this document, any reference to processor 210 may be understood to also refer to a processor or similar component within high bandwidth memory 245.

Machine 205 may also include code generator 230. Code generator 230 may be used to generate binary code (which may also be termed machine code) to execute on processor 210. Although FIG. 2 shows code generator 230 as being separate from processor 210 (or high bandwidth memory 245), embodiments of the disclosure may have processor 210 (or high bandwidth memory 245) include code generator 230.

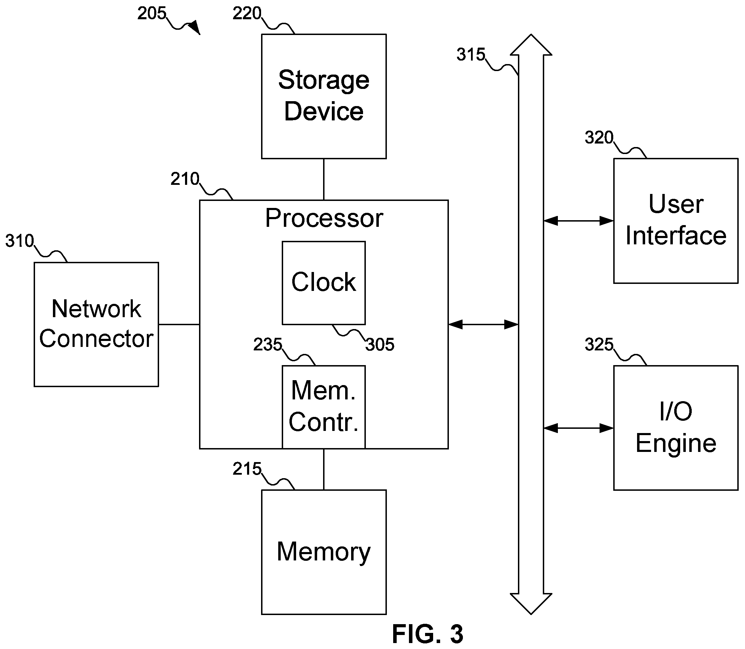

FIG. 3 shows details of the machine of FIG. 2 designed to generate and execute optimized code on the processor of FIG. 2, according to embodiments of the disclosure. In FIG. 3, typically, machine 205 includes one or more processors 210, which may include memory controllers 235 and clocks 305, which may be used to coordinate the operations of the components of the machine. Processors 210 may also be coupled to memories 215, which may include random access memory (RAM), read-only memory (ROM), or other state preserving media, as examples. Processors 210 may also be coupled to storage device 220, and to network connector 310, which may be, for example, an Ethernet connector or a wireless connector. Processors 210 may also be connected to buses 315, to which may be attached user interfaces 320 and Input/Output (I/O) interface ports that may be managed using I/O engines 325, among other components.

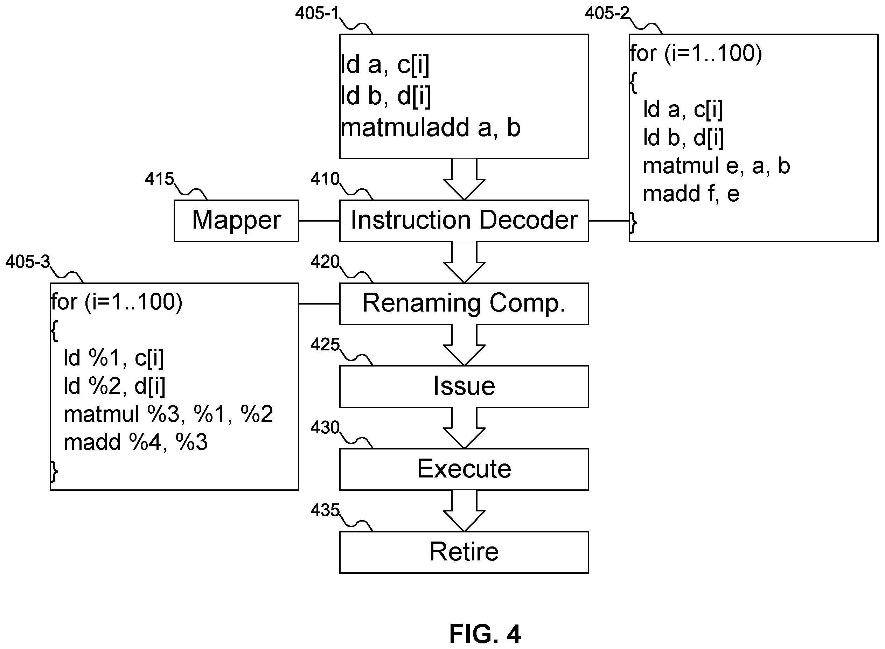

FIG. 4 shows how code to be executed by processor 210 of FIG. 2 may be adapted to manage high-level programming language instructions, according to embodiments of the disclosure. FIG. 4 may be implemented, for example, in code generator 230 of FIG. 2, and may produce binary code that may then be executed by processor 210 of FIG. 2. In FIG. 4, code 405-1 is shown. Code 405-1 might be high-level code provided by a user, or it might be low-level code that includes some high-level programming language instructions (which may also be referred to as complex instructions or composite instructions). For purposes of this discussion, a high-level programming language instruction is an instruction of a first type (such as a high-level programming language instruction) that processor 210 of FIG. 2 is not capable of directly executing, but may be translated into a set (one or more) of binary instructions (instructions of a second type, that may also be referred to as simple instructions) that processor 210 of FIG. 2 is capable of executing. As an example, processor 210 of FIG. 2 might include an Algorithmic Logic Unit (ALU) that is capable of performing basic arithmetic-addition, subtraction, multiplication, and division-but that does not include instructions for combinations of such operations, such as calculating a factorial of a number (n!). An instruction such as a factorial operation may be considered a high-level programming language instruction. But a factorial operation may be replaced with a set of binary instructions: for example, by looping from 1 to *n* and calculating a running product of all the values (just multiplication).

In FIG. 4, another example of a high-level programming language instruction is shown: the matmuladd operation. The matmuladd may be described as a matrix multiply operation combined with an accumulate operation: that is, the sum of the product of two matrices. While processor 210 of FIG. 2 might be able to perform a matrix multiplication and an accumulate operation, processor 210 of FIG. 2 might not have an instruction that performs the combined operations of matrix multiplication and accumulation. Thus, the high-level programming language instruction matmuladd may be replaced with a set of binary instructions that, in combination, perform the high-level programming language instruction.

Instruction decoder 410 may be responsible for converting high-level programming language instructions into a set of binary instructions. To support such conversion, instruction decoder 410 may use mapper 415, which may store mappings between individual high-level programming language instructions and the corresponding sets of binary instructions that may affect the result of the high-level programming language instruction. For example, instruction decoder 410 may convert code 405-1 into code 405-2, substituting a set of binary instructions for the high-level programming language matmuladd operation. While code 405-2 shows the set of binary instructions that implement that matmuladd operation as including a loop that iterates 100 times, embodiments of the disclosure might not use loops, and/or might iterate a loop any number (zero or more) of times, depending on the high-level programming language operation being performed. Thus, for example, the fact that code 405-2 shows the loop as iterating 100 times might be understood to mean that the dimensions of the vectors in the matrices being multiplied are each 100 (that is, each vector includes 100 coordinates).

After the high-level programming language instruction has been converted into a set of binary instructions, renaming component 420 may then rename variables to registers. Thus, for example, the variables *a* and *b* used in the original code may be replaced with registers %1 and %2, as shown in code 405-3. (Codes 405-1, 405-2, and 405-3, which represent different versions of the same code, may also be referred to collectively as code 405.) Any registers not currently storing data may be used; %1 and %2 are used simply as examples. Note that variables such as *a, b, c,* and *d* may represent addresses in memory 215 of FIG. 2 (or high bandwidth memory 245 of FIG. 2) where data might be stored: thus, while the variables *a* and *b* may be replaced with registers, the variables *c* and *d* may be left unchanged as the source of the data being loaded.

Once variables have been appropriately renamed with registers, issue component 425 may deliver the instructions to processor 210 of FIG. 2, and execution component 430 may then execute the instructions. (Note that since code 405 may be stored in a code memory, "delivery" may be more representative than actual.) Finally, retire component 435 may retire code 405 when code 405 has been executed.

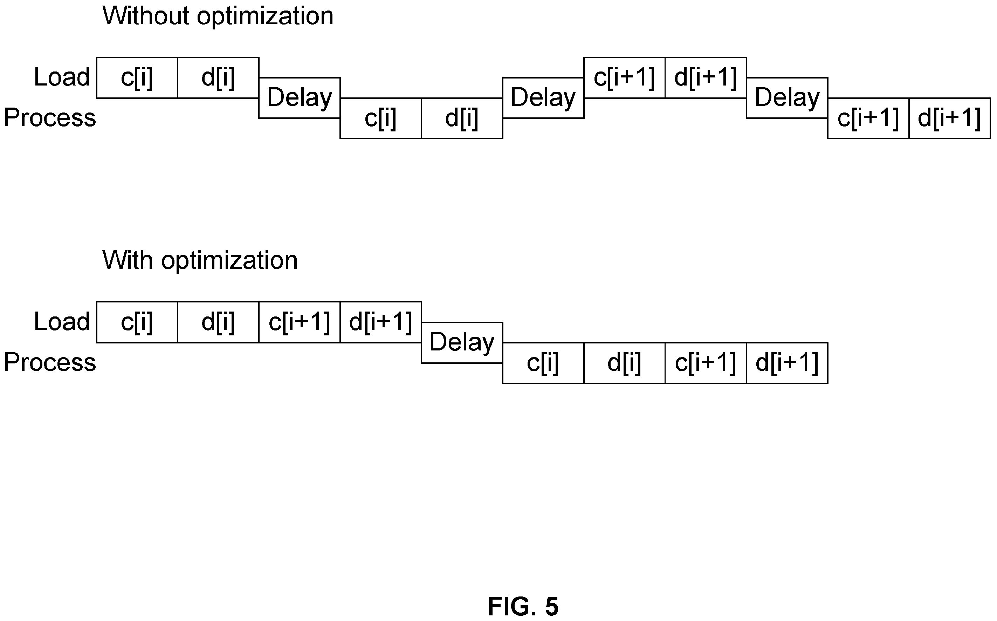

But the process described in FIG. 4 may fail to implement potential optimizations that may be enhance the efficiency of the executed code. For example, consider the sequence of operations performed in code 405-3: this sequence is shown in an alternative format in FIG. 5.

FIG. 5 compares execution time for code that is not optimized with code that is optimized, according to embodiments of the disclosure. In FIG. 5, two iterations of the loop of code 405-3 of FIG. 4 are shown, in which various operations are performed. Some operations are load operations, copying data from memory 215 of FIG. 2 (or high bandwidth memory 245 of FIG. 2) into registers 225 of FIG. 2 in processor 210 of FIG. 2. Other operations are instructions to be carried out on the data in registers 225 of FIG. 2 in processor 210 of FIG. 2. As shown at the top of FIG. 5, two load instructions may be performed, loading data from the c and *d* vectors. There may be a delay to allow these load instructions to complete. After the data is loaded, then there may be instructions to process the data so loaded into registers 225 of FIG. 2 in processor 210 of FIG. 2. Again, there may be a delay to allow these processing instructions to complete. Afterwards, the same instructions are performed on a new set of vectors *c* and *d*, with data being loaded, data being processed, and the accompanying delays. (although not shown at the end, there may also be a delay associated with processing the second two operations after the second set of data is loaded).

But if processor 210 of FIG. 2 includes sufficient registers 225 of FIG. 2 to allow for more data to be loaded at one time, and if processor 210 of FIG. 2 may support executing additional instructions at one time, then the execution of only two load instructions and two processing instructions may be less than optimal. Notice that there may be a delay associated with each load operation: performing multiple load instructions at one time may reduce the overall delay in the execution of the code.

For example, the top of FIG. 5 and the bottom of FIG. 5 may be contrasted as discussed below. At the bottom of FIG. 5, four load operations are performed at one time. There is only a single delay associated with all four load operations, as compared with two delays when the load operations are split as shown at the top of FIG. 5. Similarly, the delays associated with processing the data may be reduced when four processing operations are performed at one time, rather than split as at the top of FIG. 5.

Thus, there may be optimizations that may improve the efficiency of processor 210 of FIG. 2, by leveraging the available registers and the number of instructions that may be executed in parallel by processor 210 of FIG. 2. Code generator 230 of FIG. 2 may attempt to achieve such optimizations.

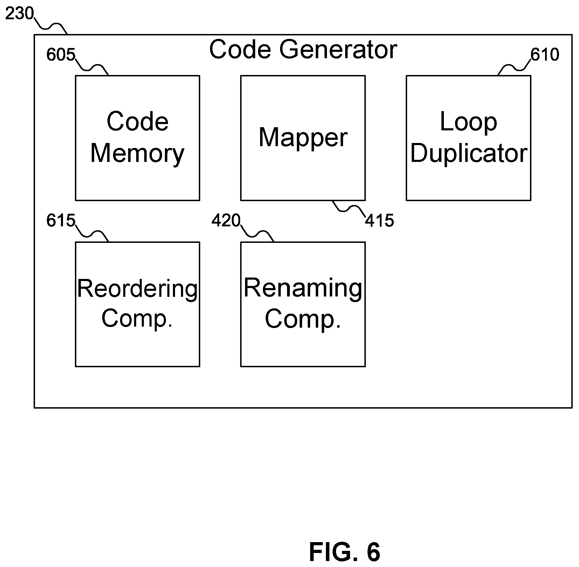

FIG. 6 shows details of code generator 230 of FIG. 2, according to embodiments of the disclosure. In FIG. 6, code generator 230 may include code memory 605, mapper 415, loop duplicator 610, reordering component 615, and renaming component 420. Code memory 605 may be a memory into which code 405 of FIG. 4 may be loaded for optimization and execution by processor 210 of FIG. 2. As discussed with reference to FIG. 2 above, code memory 605 (as well as code generator 230) may be part of processor 210 of FIG. 2, to store code 405 of FIG. 4 to be executed by processor 210 of FIG. 2.

Mapper 415 (and renaming component 420) are discussed with reference to FIG. 4. As a reminder, mapper 415 may be used to map a high-level programming language instruction into a set of one or more binary instructions that processor 210 of FIG. 2 may execute, and renaming component 420 may rename variables to registers as appropriate for processor 210 of FIG. 2 to execute the instructions.

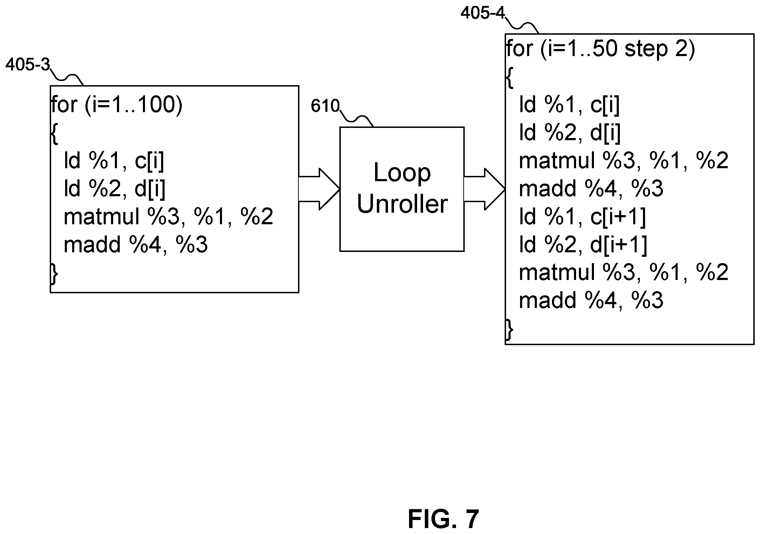

Loop duplicator 610 may be used to unroll a loop. As used herein, the term "unroll" should be understood to mean duplicating the body of the loop, but with the duplicated body of the loop operating on different data based on a different value for the loop index. As discussed with reference to FIG. 4 above, a high-level programming language instruction, such as matmuladd or factorial, may be replaced with a loop that executes some number of times. But rather than iterating the loop as emulating the high-level programming language instruction according to mapper 415, it might be more efficient to duplicate the body of the loop once (or more), thereby including additional instructions within each iteration of the loop but reducing the number of iterations of each loop. How loop duplicator 610 may function is described further with reference to FIG. 7 below.

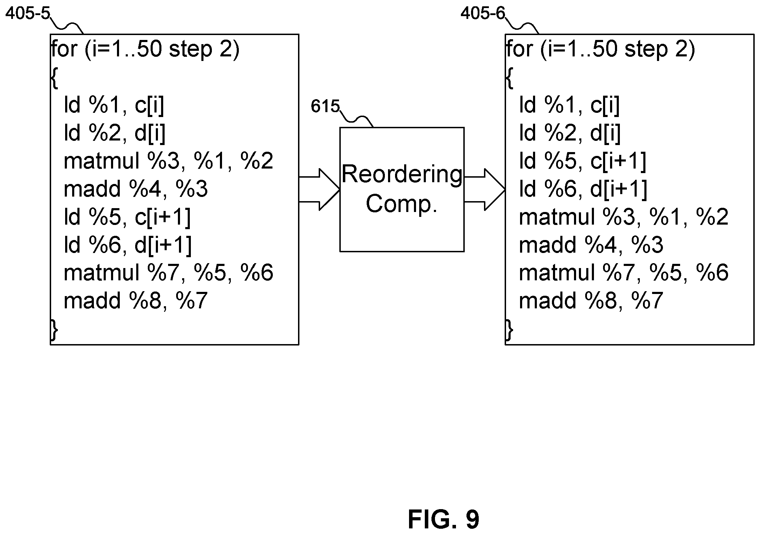

Reordering component 615 may be responsible for reordering instructions within code 405 of FIG. 4. For example, assuming that there are no data dependencies that might implicate the relative order of two instructions, reordering component 615 may change the order of the two instructions (or otherwise move instructions within code 405 of FIG. 4). How reordering component 615 may function is described further with reference to FIG. 9 below.

The components of FIG. 6 may be implemented in any desired many. For example, the components of FIG. 6 may be implemented using software or hardware modules, such as processors, circuits, FPGAs, ASICs, SoCs, or any other desired hardware. In addition, different components of FIG. 6 may be implemented using different approaches.

In some embodiments of the disclosure, code generator 230 may be part of a compiler. In other embodiments of the disclosure, code generator 230 may be part of a front-end to a compiler, doing code optimization before the compiler generates the final set of instructions that the processor may execute.

FIG. 7 shows how loop duplicator 610 of FIG. 6 may be used in optimizing code for execution on processor 210 of FIG. 2, according to embodiments of the disclosure. In FIG. 7, code 405-3 is shown. Code 405-3 is the same as code 405-3 of FIG. 4, showing the replacement of the high-level programming language instruction matmuladd with the loop that effectuates this operation.

Loop duplicator 610 may determine that processor 210 of FIG. 2 may execute more efficiently if the loop is unrolled by one iteration. For example, loop duplicator 610 may determine that processor 210 of FIG. 2 may include eight registers 225 of FIG. 2, and that code memory 605 of FIG. 6 may support four instructions being executed at a time, and that execution of the code may therefore benefit from increased parallelism by unrolling the loop in code 405-3. Thus, loop duplicator 610 may generate code 405-4, which includes two copies of the code in the loop instead of one copy. Put another way, the code inside the loop is increased to expressly recite two iterations of the loop. Note that with the loop variable adjusted as needed to ensure that the second iteration in the loop acts on the next data relevant to the loop. Thus, for example, the second iteration of the loop (shown as the four lines inserted just before the end of the loop are a copy of the original four lines of the loop, but with all references to the loop variable-in this case, *i*-incremented. In addition, to avoid the loop repeating the work performed by the second iteration in the loop, the loop variable may be adjusted to be incremented by two instead of one.

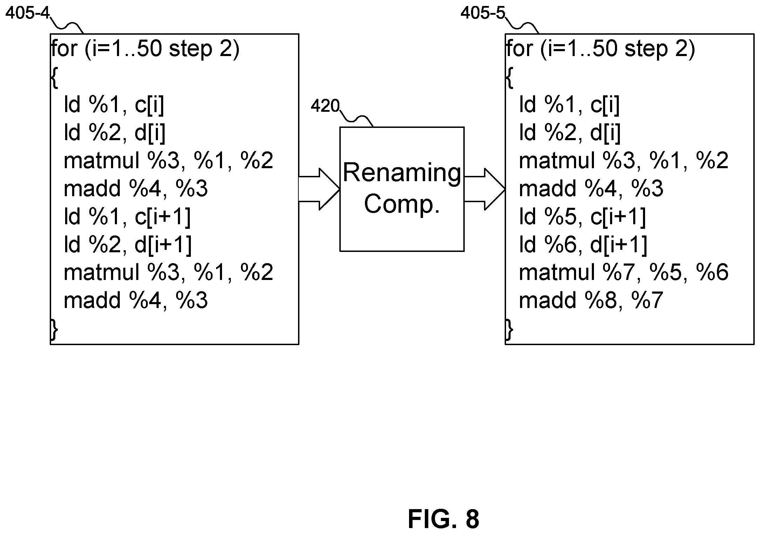

Note that the second iteration of the loop in code 405-4 uses the same registers as those used in the first iteration of the loop. When parallel execution of instructions is introduced, a problem might occur: data might be lost. For example, consider the two lines in code 405-4 "ld %1 c[i]" and "ld %1 c[i+1]". When these instructions are executed in parallel, two different data are being written to the same register %1. This scenario creates a potential problem known as the write after write hazard: there is no guarantee which operation will complete first, and therefore what data will actually be stored in register %1. The solution to this concern is to rename the registers used in the second iteration of the loop, as discussed further with reference to FIG. 8 below.

There are several pieces of information that loop duplicator 610 may factor into the decision whether to unroll the loop in code 405-3 to produce code 405-4. As discussed above, one piece of information is whether processor 210 of FIG. 2 includes sufficient registers 225 of FIG. 2 to benefit from the parallel operations. For example, as may be seen, code 405-3 already uses four registers (labeled %1 through %4). Thus, to unroll the loop in code 405-3 to increase parallelism, processor 210 of FIG. 2 would need at least eight registers 225 of FIG. 2: four registers for each loop. If processor 210 of FIG. 2 does not have eight registers 225 of FIG. 2, then there is no benefit to unrolling the loop in code 405-3. But if processor 210 of FIG. 2 includes 12 registers 225 of FIG. 2, then loop duplicator 610 might theoretically unroll two iterations of the loop, to further increase parallelism.

Also discussed above as a factor for loop duplicator 610 to consider is whether code memory 605 is of sufficient size to store all the instructions to be parallelized. If the instruction width of code memory 605 of FIG. 6 is of sufficient size to only store two instructions-that is, code memory 605 of FIG. 6 is only two-wide-there is no benefit to unrolling the loop in code 405-3, since the additional instructions would not be executed in parallel anyway. On the other hand, if code memory 605 of FIG. 6 is four-wide, then loop duplicator 610 may unroll the loop in code 405-3 and achieve increased parallelism. Similarly, if code memory 605 of FIG. 6 is eight-wide-that is, code memory 605 of FIG. 6 may store eight instructions-then loop duplicator 610 may unroll two iterations of the loop in code 405-3.

But there are other factors to consider. One such factor is data dependency. If, for example, the data in one iteration of the loop depends on the data in an earlier iteration of the loop, it might not be possible for loop duplicator 610 to unroll the loop. Code 405-3 does not appear to include any data dependencies, since the vectors c and d are only read, and not written; other types of code might include writing back to variables used in the loop, which might result in data dependencies that might prevent loop unrolling. It may be possible to augment loop duplicator 610 sufficiently to be able to check that no data being written in an iteration of the loop would be accessed by a later iteration of the loop. For example, code 405-3 stores information only in registers %3 and %4, and the store operation into register %3 is of the multiplication of two vectors (and therefore not dependent on earlier data). And while the accumulation occurring in register %4 is dependent on prior data (code 405-3 accumulates the value of register %3 into register %4, that is the point: register %4 is accumulating all the values generated by the matrix multiplication.

Another factor is data aliasing. If two different variables actually refer to the same address in memory 215 of FIG. 2 (or high bandwidth memory 245 of FIG. 2), then there might be a hidden data dependency. Data aliasing may occur, for example, by using pointers that indirectly identify data rather than by addressing the data directly. But if data aliasing is not a concern, then this factor may be ignored. And it may be possible to identify data aliasing by examining the addresses in question: if there is data aliasing, as with data dependencies, it might not be possible to unroll the loop.

FIG. 8 shows how renaming component 420 of FIG. 4 may be used in optimizing code for execution on processor 210 of FIG. 2, according to embodiments of the disclosure. In FIG. 8, code 405-4 is shown. Code 405-4 is the same as code 405-4 of FIG. 7, showing the loop being unrolled one iteration.

Because the loop has been unrolled to improve efficiency, the registers referenced in the second iteration of the loop (lines 7-10 of code 405-4, starting with "ld %1, c[i+1]" and ending with "madd %4, %3") need to be renamed. Thus, renaming component 420 may identify the registers used in the first iteration of the loop (lines 3-6 of code 405-4, starting with "ld %1, c[i]" and ending with "madd %4, %3"). In this case, four such registers are used: %1 through %4. Thus, renaming component 420 may instead use registers %5 through %8 in the second iteration of the loop, as shown in code 405-5. Put another way, renaming component 420 may identify the registers used in the first iteration of the loop, identify other registers that may be available, and rename the registers in the second iteration of the loop to use the other available registers. Any reference to register %1 in the second iteration of the loop may be replaced with a reference to register %5, any reference to register %2 may be replaced with register %6, and so on.

Unrolling the loop and renaming registers are part of achieving the desired optimizations of code generator 230 of FIG. 2. But to leverage the instruction width of code memory 605 of FIG. 6, the instructions may be reordered so that similar instructions may be performed together. This reordering is shown in FIG. 9.

FIG. 9 shows how reordering component 615 of FIG. 6 may be used in optimizing code for execution on processor 210 of FIG. 2, according to embodiments of the disclosure. In FIG. 9, code 405-5 is shown. Code 405-5 is the same as code 405-5 of FIG. 8, showing the loop being unrolled one iteration and with registers renamed.

Reordering component 615 may identify instructions that have similar functions, such as the load instructions in the two iterations of the loop. Reordering component 615 may then reorder the instructions so that the similar load instructions may be executed together. Thus, for example, the two instructions "ld %5, c[i+1]" and "ld %6, d[i+1]" have been moved adjacent to (or approximately adjacent to) the two instructions "ld %1, c[i]" and "ld %2, d[i]". Whether any individual instruction is moved to be "adjacent" or "approximately adjacent" to another depends on the instructions in question. For example, the instruction "ld %5, c[i+1]" may be considered to be "adjacent" to the instruction "ld %2, d[i]", but might be considered only "approximately adjacent" to the instruction "ld %1, c[i]", since the instruction "ld %2, d[i]" comes between the other two instructions.

In the same vein, the two instructions "matmul %7, %5, %6" and "madd %8, %7" may be thought of as having been moved to be adjacent to, or approximately adjacent to, the instructions "matmul %3, %1, %2" and "madd %4, %3". An argument might be made that these instructions have not been "moved": that only the instructions "ld %5, c[i+1]" and "ld %6, d[i+1]" have been moved. But the end result is the same: instructions of similar types have been grouped together due to reordering of individual instructions in the two iterations of the loop.

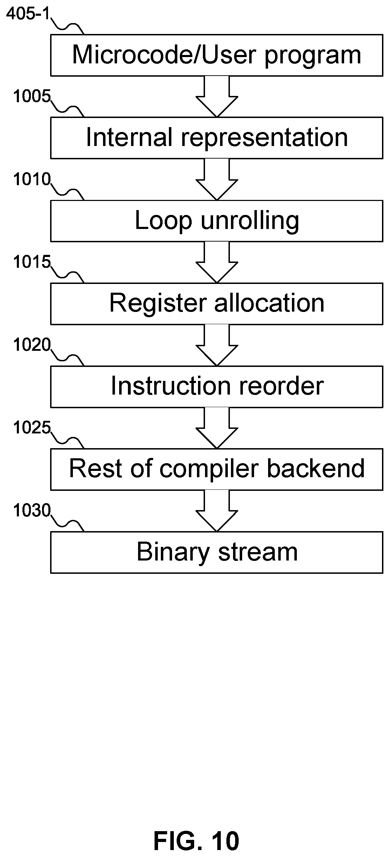

FIG. 10 shows a high level flow to optimize code for execution on processor 210 of FIG. 2, according to embodiments of the disclosure. Processing begins with code 405-1, which may be a user program, microcode, binary code, or any other desired code. Code 405-1 may then be converted into internal representation 1005. Internal representation 1005 may be some sort of intermediate representation of the code, such as a single static assignment. Loop unrolling 1010 may be performed by loop duplicator 610 of FIG. 6. Register allocation 1015 may involve allocating registers 225 of FIG. 2 in processor 210 of FIG. 2 for use with the code. Register allocation 1015 may also involve renaming registers in the code, as may be performed by renaming component 420 of FIG. 4. Instruction reorder 1020 may involve reordering instructions, as may be performed by reordering component 615 of FIG. 6. Finally, the code (with loops unrolled, registers renamed, and instructions reordered) may be provided to compiler backend 1025 to complete the object code generation, resulting in binary stream 1030.

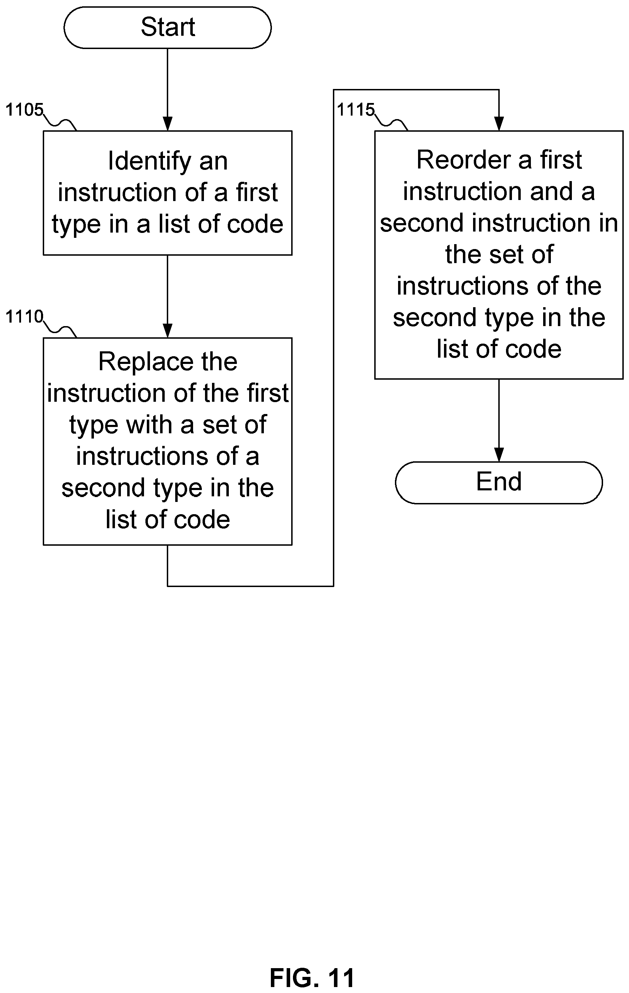

FIG. 11 shows a flowchart of an example procedure for optimizing code for execution by processor 210 of FIG. 2, according to embodiments of the disclosure. In FIG. 11, at block 1105, a high-level programming language instruction may be identified in code 405 of FIG. 4. At block 1110, the high-level programming language instruction may be replaced with a set of binary instructions in code 405 of FIG. 4. Finally, at block 1115, reordering component 615 of FIG. 6 may reorder the instructions in code 405 of FIG. 4.

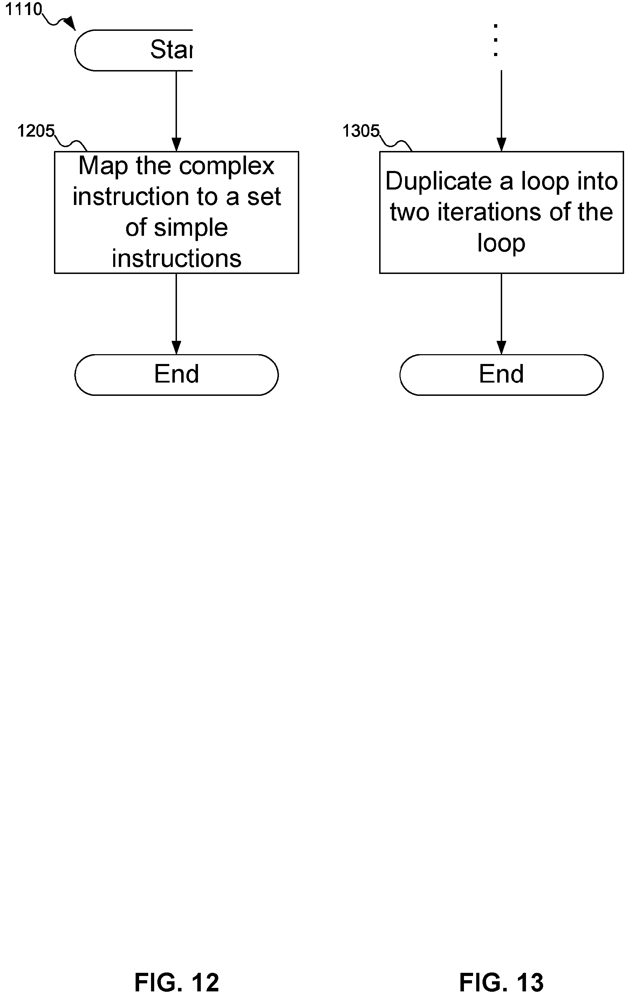

FIG. 12 shows a flowchart of an example procedure for converting a high-level programming language instruction into a set of binary instructions, according to embodiments of the disclosure. In FIG. 12, at block 1205, mapper 415 of FIG. 4 may map the high-level programming language instruction to the set of binary instructions.

FIG. 13 shows a flowchart of an example procedure for loop duplicator 610 of FIG. 6 to unroll a loop, according to embodiments of the disclosure. In FIG. 13, at block 1305, loop duplicator 610 of FIG. 6 may unroll a loop into two iterations of the loop. This loop unrolling may also involve reducing the number of iterations of the loop, as well as modifying certain uses of the loop variable.

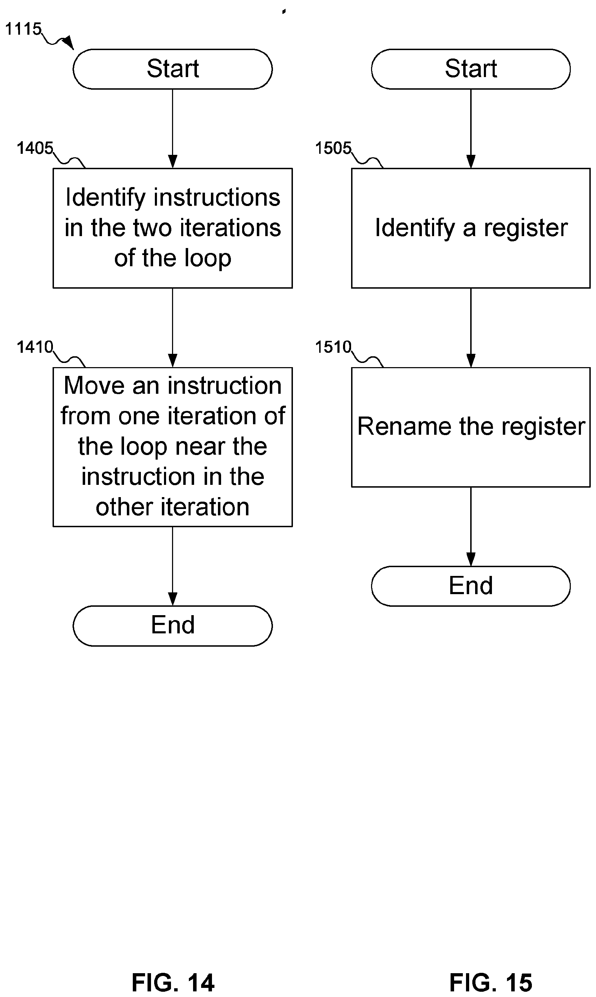

FIG. 14 shows a flowchart of an example procedure for reordering component 615 of FIG. 6 to reorder instructions in the code, according to embodiments of the disclosure. In FIG. 14, at block 1405, reordering component 615 of FIG. 6 may identify two instructions in two iterations of the loop. For example, reordering component 615 of FIG. 6 may identify one instruction in one iteration of a loop, and a second instruction in a second iteration of the loop. At block 1410, reordering component 615 of FIG. 6 may move the first instruction from one iteration of the loop to be near (which may be adjacent to or approximately adjacent to) the second instruction in the second iteration of the loop.

FIG. 15 shows a flowchart of an example procedure for remaining component 420 of FIG. 4 to rename a register, according to embodiments of the disclosure. In FIG. 15, at block 1505, remaining component 420 of FIG. 4 may identify a register used in code 405 of FIG. 4. At block 1510, remaining component 420 of FIG. 4 may rename that register to another register in code 405 of FIG. 4.

In FIGs. 11-15, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of the disclosure may modify code in order to optimize the code. Loops may be unrolled to include multiple iterations in the code. Registers may be renamed, and instructions may be rearranged. By modifying the code, embodiments of the disclosure offer a technical advantage to improve code efficiency, leveraging available registers and the instruction width of the code memory.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, *e.g.,* automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, *e.g.,* RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

## Claims

1. A system, comprising:
a processor, the processor including a register and a code memory; and
a reordering component to reorder a first instruction and a second instruction in a set of instructions of a first type in a list of code stored in the code memory, at least one of the first instruction and the second instruction accessing the register.

2. The system according to claim 1, wherein the system includes a stacked memory including a compute engine, the stacked memory including a compute engine including the processor and the reordering component.

3. The system according to claim 2, wherein:
the stacked memory including the compute engine includes a base die and a memory die; and
the processor is included in the base die or the memory die.

4. The system according to any one of claims 1 to 3, further comprising a mapper to map an instruction of a second type to the set of instructions of the first type, the instruction of the second type stored in the code memory.

5. The system according to claim 4, wherein:
the set of instructions of the first type include a set of binary instructions; and
the instruction of the second type includes a high-level programming language instruction.

6. The system according to any one of claims 1 to 5, further comprising a loop duplicator to duplicate a body of a loop in the list of code to include a first iteration of the body of the loop and a second iteration of the body of the loop.

7. The system according to claim 6, wherein the reordering component is configured to:
identify the first instruction in the first iteration of the body of the loop;
identify the second instruction in the second iteration of the body of the loop; and
move the first instruction in the first iteration of the body of the loop based at least in part on the second instruction in the second iteration of the body of the loop.

8. The system according to claim 6 or 7, further comprising a renaming component to identify the register in the first iteration of the body of the loop and to rename the register to a second register in the first iteration of the body of the loop.

9. A method, comprising:
identifying an instruction of a first type in a list of code;
replacing the instruction of the first type with a set of instructions of a second type in the list of code; and
reordering a first instruction and a second instruction in the set of instructions of the second type in the list of code.

10. The method according to claim 9, wherein:
the instruction of the first type includes a high-level programming language instruction; and
the set of instructions of the second type include a set of binary instructions.

11. The method according to claim 9 or 10, wherein replacing the instruction of the first type with the set of instructions of the second type in the list of code includes mapping the instruction of the first type to the set of instructions of the second type.

12. The method according to any one of claims 9 to 11, wherein:
the set of instructions of the second type includes a body of a loop; and
the method further comprises duplicating the body of the loop to include a first iteration of the body of the loop and a second iteration of the body of the loop.

13. The method according to claim 12, wherein unrolling the loop to include the first iteration of the loop and the second iteration of the loop includes unrolling the loop to include the first iteration of the loop and the second iteration of the loop based at least in part on a first number of registers in a processor and a second number of instructions that may be stored in a code memory.

14. The method according to claim 12 or 13, wherein reordering the first instruction and the second instruction in the set of simple instructions in the list of code includes:
identifying the first instruction in the first iteration of the body of the loop;
identifying the second instruction in the second iteration of the body of the loop; and
moving the first instruction in the first iteration of the body of the loop based at least in part on the second instruction in the second iteration of the body of the loop.

15. The method according to any one of claims 12 to 14, further comprising:
identifying a first register in the first iteration of the body of the loop; and
renaming the first register to a second register in the first iteration of the body of the loop.
